# EUROPÄISCHE PATENTANMELDUNG

(11) **EP 4 015 885 A1**
(43) Veröffentlichungstag der Anmeldung: **22.06.2022**
(21) Anmeldenummer: 21211858.2
(22) Anmeldetag: 02.12.2021
(51) Int. Cl.: F16L 3/04, F24D 3/10, F24D 19/00

(54) **WANDBEFESTIGUNGSVORRICHTUNG FÜR EINEN VORLAUF UND EINEN RÜCKLAUF EINES HEIZKREISVERTEILERS**

(30) Priorität: 17.12.2020 DE 102020133880
(71) Anmelder: fischerwerke GmbH & Co. KG, 72178 Waldachtal (DE)
(72) Erfinder: Martini, Michele, 30038 Spinea (VE) (IT); Miotto, Moreno, 35020 Brugine (PD) (IT)
(74) Vertreter: Suchy, Ulrich Johannes

(57) **Zusammenfassung**

Zu einer Befestigung eines Vorlaufs (2) und eines Rücklaufs (3) eines Heizkreisverteilers schlägt die Erfindung einen streifenförmigen Grundhalter (4) mit zwei identischen Rohrschellen (5, 6) vor, die in verschiedenen Abständen von einer Wandbefestigungsebene (17) verschiebbar an einem Schiebeabschnitt (12) des Grundhalters (4) und unverschieblich an einem dritten Befestigungsabschnitt (15) des Grundhalters (4) angeordnet sind.

## Beschreibung

Die Erfindung betrifft eine Wandbefestigungsvorrichtung für einen Vorlauf und einen Rücklauf eines Heizkreisverteilers mit den Merkmalen des Oberbegriffs des Anspruchs 1.

Heizkreisverteiler dienen einem Verteilen von warmem Heizungswasser in mehrere Heizkreise. Sie weisen üblicherweise einen Vorlauf und einen Rücklauf auf, die vielfach als Rohre mit rundem, eckigem oder sonstigem Querschnitt ausgebildet sind, an die Heizwasserrohre oder allgemein Heizwasserleitungen der Heizkreise quer zum Vorlauf und zum Rücklauf angeschlossen werden.

Das chinesische Gebrauchsmuster CN 206 669 195 U offenbart eine Wandbefestigungsvorrichtung für einen Vorlauf und einen Rücklauf eines Heizkreisverteilers, die zwei Blechstreifen mit jeweils zwei U-förmigen Schellenbügeln aufweist. Die beiden Blechstreifen werden parallel zueinander und mit seitlichem Abstand nebeneinander an einer Wand befestigt und mit den Schellenbügeln werden der Vorlauf und der Rücklauf des Heizkreisverteilers quer zu den Blechstreifen an den Blechstreifen befestigt. Die beiden Blechstreifen sind gekröpft, das heißt doppelt in entgegengesetzten Richtungen abgewinkelt, so dass sich jeweils ein Endabschnitt der Blechstreifen in einer zu Befestigungsabschnitten der Blechstreifen parallel versetzten Ebene befindet. Die Befestigungsabschnitte werden an der Wand befestigt, so dass die Endabschnitte einen Abstand von der Wand aufweisen. Der Vorlauf und der Rücklauf weisen dadurch unterschiedliche Abstände von der Wand auf, so dass Heizleitungen beispielsweise vom Vorlauf parallel zur Wand über den Rücklauf hinweg geführt werden können.

Die chinesische Patentanmeldung CN 103 775 727 A offenbart ebenfalls eine Befestigungsvorrichtung für einen Vorlauf und einen Rücklauf eines Heizkreisverteilers mit zwei Blechstreifen, an denen der Vorlauf und der Rücklauf mit Schnappschellen befestigt werden. Die beiden Blechstreifen sind hier an beiden Enden gekröpft. Die Schnappschellen weisen Befestigungsschuhe mit flachen Vierkantstecklöchern auf, mit denen sie auf die beiden gekröpften Enden der Blechstreifen gesteckt werden. Die Kröpfungen der Blechstreifen sind verschieden hoch, so dass die Schnappschellen unterschiedliche Abstände von der Wand aufweisen.

Aufgabe der Erfindung ist, eine Wandbefestigungsvorrichtung für einen Vorlauf und einen Rücklauf eines Heizkreisverteilers mit einer Anpassung an einen Abstand des Vorlaufs vom Rücklauf vorzuschlagen.

Diese Aufgabe wird erfindungsgemäß durch die Merkmale des Anspruchs 1 gelöst. Die erfindungsgemäße Wandbefestigungsvorrichtung mit den Merkmalen des Anspruchs 1 weist einen Grundhalter mit zwei Befestigungsbügeln auf, von denen einer zu einer Befestigung eines Vorlaufs und der andere zur Befestigung eines Rücklaufs eines Heizkreisverteilers an dem Grundhalter dienen. Die Befestigungsbügel sind beispielsweise U-förmige oder Q-förmige Bügel, Schnappbügel, Rohrschellen oder dergleichen Befestigungselemente, die den Vorlauf und den Rücklauf allein oder zusammen mit dem Grundhalter vollständig oder jedenfalls so weit umschließen, dass der Vorlauf und der Rücklauf an dem Grundhalter befestigt sind.

Der Grundhalter weist eine Wandbefestigungsebene auf, mit der er an der Wand anliegend an der Wand befestigbar ist. Der Grundhalter kann durchgehend über seine gesamte Länge beziehungsweise vollflächig an der Wand anliegen, oder er weist eine oder mehrere Wandbefestigungsstellen und/oder Wandbefestigungsabschnitte in der Wandbefestigungsebene auf, mit denen der Grundhalter an der Wand anliegt, wenn er in vorgesehener Weise an der Wand befestigt ist. Die Wandbefestigungsebene ist also eine gedachte Ebene, die durch die Punkte, an denen der Grundhalter an einer ebenen Wand anlegbar ist, definiert ist.

Insbesondere weist der Grundhalter ein Befestigungsloch, beispielsweise eine kreisförmige Bohrung, zur Befestigung mittels einer Schraube an einer Wand auf.

Der Grundhalter weist für jeden der beiden Befestigungsbügel eine Bügelanlage in unterschiedlichem Abstand von der Wandbefestigungsebene auf. Die Bügelanlage ist eine Stelle des Grundhalters, die zur Befestigung eines der Befestigungsbügel am Grundhalter vorgesehen und/oder ausgebildet ist. Sie ist insbesondere eine der Wandbefestigungsebene des Grundhalters abgewandte Fläche, an der der Befestigungsbügel mit einer der Wandbefestigungsebene zugewandten Fläche, Seite oder Stelle anliegt, wenn der Befestigungsbügel wie vorgesehen an dem Grundhalter befestigt ist. Durch die unterschiedlichen Abstände der Bügelanlagen des Grundhalters von der Wandbefestigungsebene des Grundhalters weisen die beiden Befestigungsbügel und insbesondere der Vorlauf und der Rücklauf des Heizkreisverteilers unterschiedliche Abstände von der Wand auf, wenn der Grundhalter wie vorgesehen an der Wand, die beiden Befestigungsbügel wie vorgesehen an den beiden Bügelanlagen am Grundhalter, und der Vorlauf in einem und der Rücklauf in dem anderen Befestigungsbügel befestigt sind. Der unterschiedliche Abstand des Vorlaufs und des Rücklaufs von der Wand vereinfacht es, an den Vorlauf oder den Rücklauf angeschlossene Heizwasserrohre oder Heizwasserleitungen auf einer der Wand abgewandten Seite über den Rücklauf oder den Vorlauf hinweg zu führen.

Erfindungsgemäß weist die Wandbefestigungsvorrichtung eine Schiebeführung für zumindest einen der beiden Befestigungsbügel auf, die den Befestigungsbügel verschieblich an dem Grundhalter führt, so dass ein Abstand der beiden Befestigungsbügel voneinander zu einer Anpassung an einen Abstand des Vorlaufs vom Rücklauf des Heizkreisverteilers einstellbar beziehungsweise verstellbar ist.

Vorzugsweise ist der Grundhalter streifenförmig und insbesondere ein Blechstreifen.

Vorzugsweise weist die Wandbefestigungsvorrichtung zwei oder auch mehr Grundhalter mit jeweils zwei Befestigungsbügeln auf, die mit Abstand voneinander nebeneinander an der Wand befestigt werden können, so dass die Befestigungsbügel der beiden Grundhalter miteinander fluchten.

Die Befestigungsbügel sind vorzugsweise geometrisch gleich, insbesondere sind sie - gegebenenfalls mit Ausnahme ihrer Farbe - identisch. Die Wandbefestigungsvorrichtung benötigt dadurch weniger verschiedene Bauteile. Die Befestigungsbügel können eine gleiche oder verschiedene Farben aufweisen, insbesondere kann ein Befestigungsbügel für den Vorlauf des Heizkreisverteilers rot und ein Befestigungsbügel für den Rücklauf des Heizkreisverteilers blau sein.

Zu einer Befestigung eines der beiden Befestigungsbügel am Grundhalter sieht eine Ausgestaltung der Erfindung vor, dass der Grundhalter im Bereich der Schiebeführung und/oder im Bereich der Bügelanlage einen Abstand von der Wandbefestigungsebene und damit auch von der Wand aufweist, wenn er wie vorgesehen an der Wand befestigt ist. Der Abstand des Grundhalters im Bereich der Schiebeführung und/oder der Bügelanlage von der Wand ermöglicht ein Hintergreifen des Grundhalters im Bereich der Schiebeführung durch den Befestigungsbügel oder ein Befestigungselement zur Befestigung des Befestigungsbügels am Grundhalter auf einer der Wand zugewandten Seite des Grundhalters. Die der Wand zugewandte Seite wird nachfolgend kurz als "Wandseite" bezeichnet.

Vorzugsweise weist einer der beiden oder weisen beide Befestigungsbügel eine Schnappbefestigungseinrichtung auf, mit der sie zur Befestigung am Grundhalter auf diesen aufschnappbar sind, wenn der Grundhalter an der Wand befestigt ist. Diese Ausgestaltung ermöglicht eine einfache, schnelle Befestigung des oder der Befestigungsbügel am Grundhalter ohne Werkzeug.

Eine Weiterbildung sieht vor, dass die Schnappbefestigungseinrichtung einen federnden Halter, der seitlich in Richtung der Wandbefestigungsebene an dem Grundhalter vorbei tritt, mit einer Raste, die den Grundhalter auf einer Wandseite hintergreift, wenn der Befestigungsbügel mit der Schnappbefestigungseinrichtung wie vorgesehen am Grundhalter befestigt ist, aufweist.

Vorzugsweise weist die erfindungsgemäße Wandbefestigungsvorrichtung eine manuell ohne Werkzeug betätigbare Feststelleinrichtung auf, die einen der beiden Befestigungsbügel gegen Verschiebung an dem Grundhalter festlegt. In bevorzugter Ausgestaltung weist die erfindungsgemäße Wandbefestigungsvorrichtung für beide Befestigungsbügel eine solche Feststelleinrichtung auf. Die Feststelleinrichtung kann den Befestigungsbügel durch Reibschluss stufenlos oder durch Formschluss mit dem Grundhalter und/oder dem Befestigungsbügel in Schritten gegen Verschiebung an dem Grundhalter festlegen. Die Aufzählung ist beispielhaft und nicht abschließend. Vorzugsweise lässt sich die Feststelleinrichtung ohne Werkzeug manuell in dem Sinne lösen, dass sie den Befestigungsbügel nicht gegen Verschiebung am Grundhalter festlegt, sondern bei gelöster Feststelleinrichtung der Befestigungsbügel am Grundhalter verschiebbar ist.

Beispielsweise weist der Grundhalter eine zahnstangenartige Verzahnung als Teil der in diesem Fall formschlüssigen Feststelleinrichtung auf, mit der ein oder mehrere Zähne, eine Klinke oder dergleichen Eingriffelement des Befestigungsbügels in Eingriff stehen, die ebenfalls Teil der Feststelleinrichtung sind. Zum Lösen wird der oder werden die Zähne, die Klinke oder dergleichen Eingriffelement außer Eingriff von der Verzahnung des Grundhalters gebracht.

Eine Weiterbildung der Erfindung sieht eine Federlasche mit dem oder den Zähnen, der Klinke oder dergleichen Eingriffelement an dem Befestigungsbügel vor, die den oder die Zähne, die Klinke oder das Eingriffelement in Eingriff mit der Verzahnung des Grundhalters hält und die manuell elastisch so verformt werden kann, dass der oder die Zähne, die Klinke oder das Eingriffelement außer Eingriff von der Verzahnung des Grundhalters gelangen, so dass der Befestigungsbügel am Grundhalter verschiebbar ist. Die Federlasche mit dem oder den Zähnen, der Klinke oder dergleichen Eingriffelement kann einstückiger Bestandteil des Befestigungsbügels sein.

Eine bevorzugte Ausgestaltung der Erfindung sieht eine einstückige Ausbildung eines oder vorzugsweise beider Befestigungsbügel einschließlich eines Schließmechanismus zum Schließen des Befestigungsbügels um den Vorlauf oder den Rücklauf des Heizkreisverteilers und/oder einer Befestigungseinrichtung zur Befestigung des Befestigungsbügels an dem Grundhalter vor.

Eine ebenfalls bevorzugte Ausgestaltung der Erfindung sieht einen Schließmechanismus mit einer Rasteinrichtung zu einem Schließen des Befestigungsbügels ohne Werkzeug vor. Die Rasteinrichtung ermöglicht ein unterschiedlich enges Schließen des Befestigungsbügels zu einer Anpassung an Vorläufe und Rückläufe mit unterschiedlichen Durchmessern beziehungsweise unterschiedlichen Umfängen.

Ebenfalls zu einer Anpassung an Vorläufe und Rückläufe mit unterschiedlichen Durchmessern beziehungsweise unterschiedlichen Umfängen sieht eine Ausgestaltung der Erfindung eine nach innen, das heißt in einen von dem Befestigungsbügel umschlossenen beziehungsweise umgriffenen Querschnitt hinein, stehende Anlage für den Vorlauf oder den Rücklauf des Heizkreisverteilers vor. Die Anlagen sind zur Anpassung an die unterschiedlichen Durchmesser beziehungsweise unterschiedlichen Umfänge elastisch und/oder plastisch verformbar.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine erfindungsgemäße Wandbefestigungsvorrichtung für einen Vorlauf und einen Rücklauf eines Heizkreisverteilers in einer perspektivischen Darstellung mit Blick schräg auf eine wandabgewandte Seite;
- Figur 2: die Wandbefestigungsvorrichtung aus Figur 1 in einer perspektivischen Darstellung mit Blick schräg auf eine wandzugewandte Seite;
- Figur 3: eine vergrößerte Einzelheit gemäß Pfeil III in Figur 1; und
- Figur 4: die Befestigung eines Vorlaufs und eines Rücklaufs eines Heizkreisverteilers mit der Wandbefestigungsvorrichtung aus Figuren 1 und 2 in einer Figur 1 entsprechenden Perspektive.

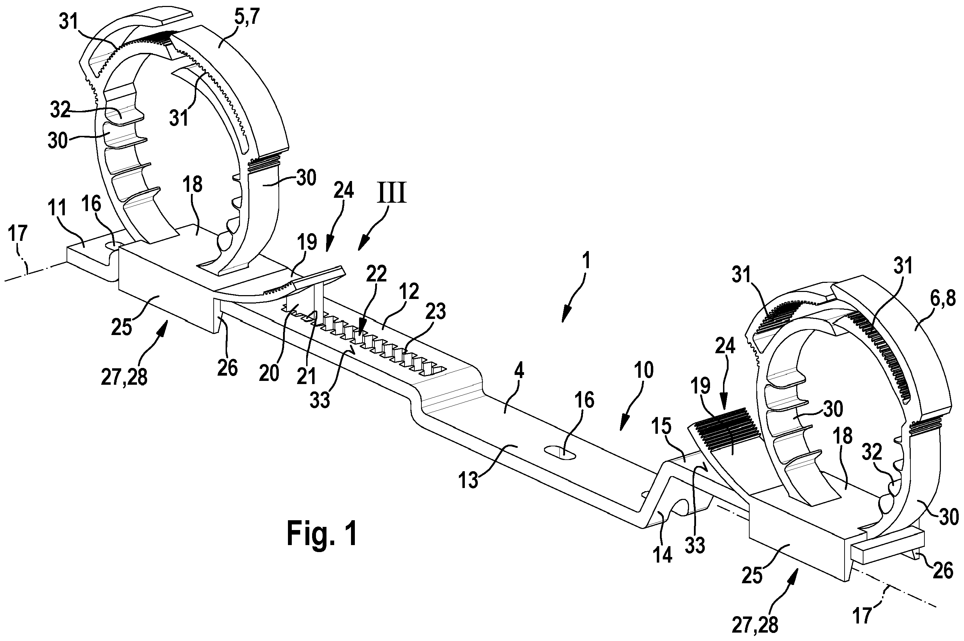

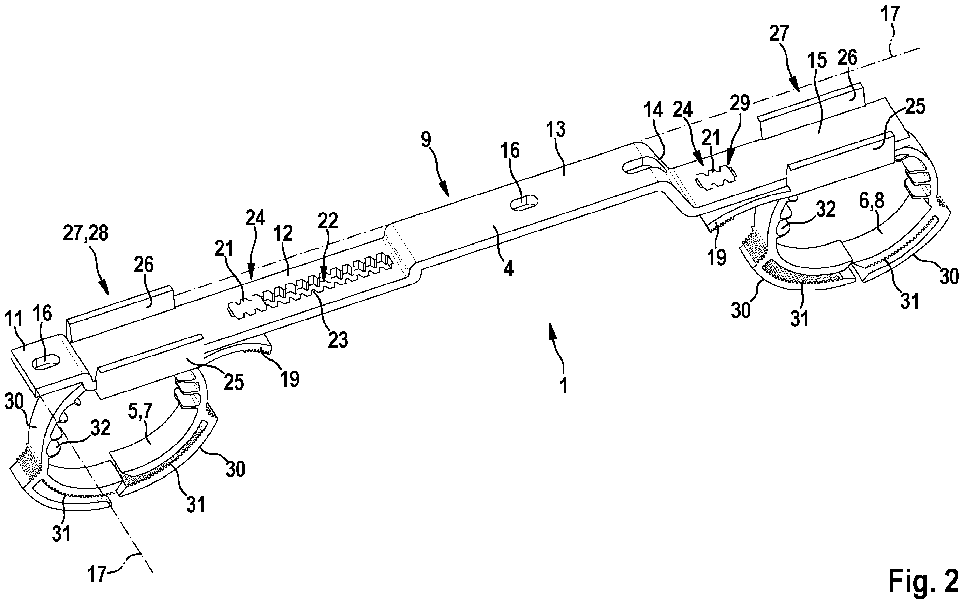

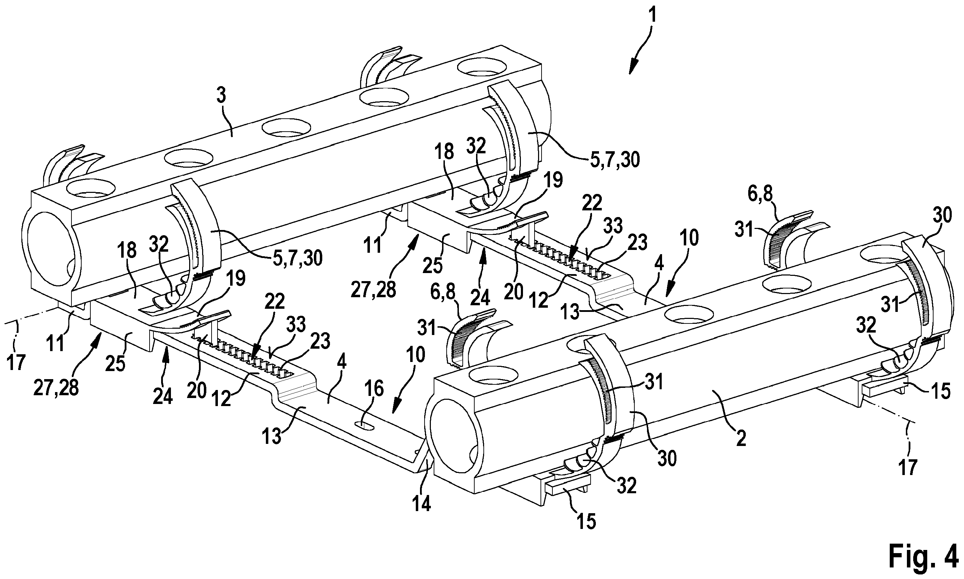

Die in Figuren 1 und 2 dargestellte, erfindungsgemäße Wandbefestigungsvorrichtung 1 für einen Vorlauf 2 und einen Rücklauf 3 (Figur 4) eines Heizkreisverteilers (nicht dargestellt) weist einen Blechstreifen als Grundhalter 4 und zwei Rohrschellen 5, 6, die allgemein auch als Befestigungsbügel 7, 8 aufgefasst werden können, auf.

Nachfolgend werden eine Seite des den Grundhalter 4 bildenden Blechstreifens als Wandseite 9 und eine andere Seite als Wand abgewandte Seite 10 bezeichnet werden. Ausgehend von einem Ende weist der Grundhalter 4 einen ersten Befestigungsabschnitt 11, daran anschließend einen Schiebeabschnitt 12, daran anschließend einen zweiten Befestigungsabschnitt 13, daran anschließend eine Kröpfung 14 und daran anschließend einen dritten Befestigungsabschnitt 15 auf. Im ersten und im zweiten Befestigungsabschnitt 11, 13 weist der Grundhalter 4 jeweils ein Befestigungsloch 16 zu einer Befestigung des Grundhalters 4 mit beispielsweise Schrauben an einer Wand auf (nicht dargestellt).

Die Wandseiten 9 des ersten und des zweiten Befestigungsabschnitts 11, 13 befinden sich in einer gemeinsamen Ebene, die hier als Wandbefestigungsebene 17 bezeichnet wird. Der den Grundhalter 4 bildende Blechstreifen wird mit seiner Wandseite 9 der Wand zugewandt an dieser so befestigt, dass die Wandseite 9 des ersten und des zweiten Befestigungsabschnitts 11, 13 an der Wand anliegen. Die Wandbefestigungsebene 17 befindet sich an einer Oberfläche der Wand, an der der Grundhalter 4 befestigt ist.

Der Schiebeabschnitt 12 des Grundhalters 4 verläuft parallel zum ersten und zum zweiten Befestigungsabschnitt 11, 13, wobei der Schiebeabschnitt 12 durch jeweils doppelte, rechtwinklige Abwinklungen in entgegengesetzten Richtungen um - im Ausführungsbeispiel - etwas mehr als eine Dicke des den Grundhalter 4 bildenden Blechstreifens von der Wandseite 9 weg in Richtung der Wand abgewandten Seite 10 versetzt zum ersten und zum zweiten Befestigungsabschnitt 11, 13 ist. Dadurch weist der Schiebeabschnitt 12 einen Abstand von der nicht dargestellten Wand und von der Wandbefestigungsebene 17 auf.

Die Kröpfung 14 weist ebenfalls zwei - im Ausführungsbeispiel stumpfwinklige - betragsmäßig gleich große Abwinklungen in entgegengesetzten Richtungen auf, so dass der dritte Befestigungsabschnitt 15 ebenfalls parallel von der Wandseite 9 weg in Richtung der Wand abgewandten Seite 10 zum ersten und zum zweiten Befestigungsabschnitt 11, 13 und zur Wandbefestigungsebene 17 versetzt ist.

Eine erste der beiden Rohrschellen 5 ist am Schiebeabschnitt 12 und eine zweite der beiden Rohrschellen 6 am dritten Befestigungsabschnitt 15 des den Grundhalter 4 bildenden Blechstreifens angeordnet. Im Ausführungsbeispiel sind die beiden Rohrschellen 5, 6 mit Ausnahme ihrer Farben identisch, sie sind im Ausführungsbeispiel einstückig als Spritzgussteile aus Kunststoff hergestellt.

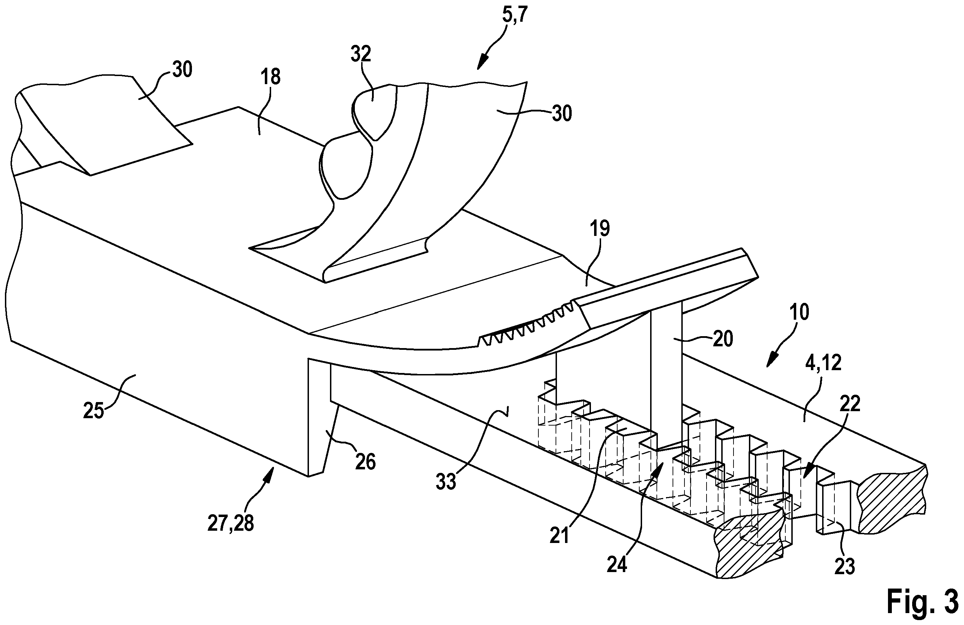

Die beiden Rohrschellen 5, 6 weisen ebene Fußplatten 18 auf, die am Schiebeabschnitt 12 beziehungsweise am dritten Befestigungsabschnitt 15 des Grundhalters 4 anliegen. Die Wand abgewandten Seiten 10 des Schiebeabschnitts 12 und des dritten Befestigungsabschnitts 15 des Grundhalters 4 bilden Bügelanlagen 33, an denen die Fußplatten 18 der die Befestigungsbügel 7, 8 bildenden Rohrschellen 5, 6 anliegen. Von den Fußplatten 18 stehen einstückig in Längsrichtung des Grundhalters 4 elastische Federlaschen 19 - im Ausführungsbeispiel bogenförmig - schräg in einem spitzen Winkel von der Wand abgewandten Seite 10 von dem Grundhalter 4 ab. Von dem Grundhalter 4 zugewandten Seiten der Federlaschen 19 steht jeweils ein Steg 20 in Richtung des Grundhalters 4 ab, von denen - im Ausführungsbeispiel - jeweils drei Zähne 21 auf beiden Seiten abstehen (Figur 3).

Im Schiebeabschnitt 12 weist der Grundhalter 4 einen Längsschlitz 22 mit zahnstangenartigen Verzahnungen 23 an beiden Längsrändern auf, mit denen die Zähne 21 des Stegs 20 der Federlasche 19 der ersten Rohrschelle 5 in Eingriff stehen (Figur 3), so dass die erste Rohrschelle 5 gegen Verschieben am Grundhalter 4 festgelegt ist. Indem die Federlasche 19 in Richtung des Grundhalters 4 oder auch weg vom Grundhalter 4 beaufschlagt wird, treten die Zähne 21 der ersten Rohrschelle 5 außer Eingriff von den Verzahnungen 23 des Grundhalters 4, wodurch die erste Rohrschelle 5 im Schiebeabschnitt 12 in der Längsrichtung des Grundhalters 4 verschiebbar ist. Der Längsschlitz 22 mit den zahnstangenartigen Verzahnungen 23 des Grundhalters 4 und die Federlasche 19 mit dem Steg 20 und den Zähnen 21 der ersten Rohrschelle 5 bilden eine Feststelleinrichtung 24 zur unverschieblichen Festlegung der ersten Rohrschelle 5, die wie erwähnt allgemein auch als erster Befestigungsbügel 7 aufgefasst werden kann, am Grundhalter 4. Die Feststelleinrichtung 24 ist ohne Werkzeug, nämlich durch Fingerdruck auf oder Fingerzug an der Federlasche 19 betätigbar, nämlich lösbar, so dass die erste Rohrschelle 5 am Grundhalter 4 verschiebbar ist.

Die Zähne 21 der Feststelleinrichtung 24 können allgemein auch als Klinken zu einem formschlüssigen Eingriff am Grundhalter 4 zu einer Festlegung der Rohrschellen 5, 6 gegen Verschieben am Grundhalter 4 aufgefasst werden. Die Feststelleinrichtung 24 kann auch nur auf einer Seite des Stegs 20 Zähne 21, und sie kann weniger oder auch mehr Zähne 21 auf einer oder auf beiden Seiten des Stegs 20 aufweisen (nicht dargestellt). Grundsätzlich genügt ein Zahn 21. Ebenso kann der Längsschlitz 22 nur eine Verzahnung 23 auf einer Seite, und zwar auf der Seite, auf der der Steg 20 einen oder mehrere Zähne 21 aufweist, aufweisen (nicht dargestellt).

Von beiden Längsseiten der Fußplatten 18 der die Befestigungsbügel 7, 8 bildenden Rohrschellen 5, 6 stehen elastische und mit den Fußplatten 18 einstückige, im Ausführungsbeispiel streifenförmige Halter 25 ab, die an Längsrändern des Grundhalters 4 in Richtung der Wandbefestigungsebene 17 vorbei treten. Die Halter 25 weisen Rasten 26 mit sägezahnförmigem Querschnitt auf, die den Grundhalter 4 auf der Wandseite 9 im Schiebeabschnitt 12 beziehungsweise im dritten Befestigungsabschnitt 15 hintergreifen. Die elastischen Halter 25 mit den sägezahnförmigen Rasten 26 bilden eine - im Ausführungsbeispiel mit der Rohrschelle 5, 6 einstückige - Schnappbefestigungseinrichtung 27 zur Befestigung der die Befestigungsbügel 7, 8 bildenden Rohrschellen 5, 6 am Grundhalter 4. Zur Befestigung lassen sich die Rohrschellen 5, 6 im Schiebeabschnitt 12 und im zweiten Befestigungsabschnitt 13 von der Wand abgewandten Seite 10 auf den Grundhalter 4 drücken und dadurch auf den Grundhalter 4 aufschnappen. Auf den dritten Befestigungsabschnitt 15 kann die zweite Rohrschelle 6 auch vom Ende des Grundhalters 4 her aufgeschoben werden. Durch den Abstand des Schiebeabschnitts 12 von der Wandbefestigungsebene 17 des Grundhalters 4 beziehungsweise von der nicht dargestellten Wand, an der der Grundhalter 4 befestigt ist, können die Rasten 26 der Halter 25 der Schnappbefestigungseinrichtung 27 der ersten Rohrschelle 5 den Grundhalter 4 im Schiebeabschnitt 12 hintergreifen.

Die Halter 25 mit den Rasten 26 beziehungsweise die Schnappbefestigungseinrichtung 27 der ersten Rohrschelle 5 beziehungsweise des ersten Befestigungsbügels 7 bilden zusammen mit dem Schiebeabschnitt 12 des den Grundhalter 4 bildenden Blechstreifens eine Schiebeführung 28, die die erste Rohrschelle 5 in der Längsrichtung des Grundhalters 4 im Schiebeabschnitt 12 verschieblich am Grundhalter 4 führt.

Der dritte Befestigungsabschnitt 15 des Grundhalters 4, an dem die zweite Rohrschelle 6 angeordnet ist, die den zweiten Befestigungsbügel 8 bildet, weist ein kurzes Langloch 29 mit Verzahnungen auf beiden Seiten auf, die so viele Zahnlücken wie die Feststelleinrichtung 24 der zweiten Rohrschelle 6 Zähne 21 aufweist, im Ausführungsbeispiel also drei auf jeder Seite. Die zweite Rohrschelle 6 ist dadurch unverschieblich am Grundhalter 4 festgelegt.

Zur Befestigung des Vorlaufs 2 und des Rücklaufs 3 weisen die Rohrschellen 5, 6 jeweils zwei - im Ausführungsbeispiel kreisbogenförmige - Schellenbügelarme 30 auf, die einstückig auf der wandabgewandten Seite 10 von den Fußplatten 18 abstehen und sich zu einem Kreis beziehungsweise einem Ring ergänzen. Die Schellenbügelarme 30 weisen an einander zugewandten Seiten - das heißt der eine Schellenbügelarm 30 innen und der andere Schellenbügelarm 30 außen - sägezahnförmige Profilierungen auf, die einen Schließmechanismus 31 beziehungsweise eine Rasteinrichtung bilden, mit dem sich die Rohrschellen 5, 6 unterschiedlich eng schließen lassen.

Zur Befestigung des Vorlaufs 2 und des Rücklaufs 3 des Heizkreisverteilers werden zwei oder auch mehr Grundhalter 4 mit jeweils zwei Rohrschellen 5, 6 an der nicht dargestellten Wand befestigt, wobei die Grundhalter 4 parallel zueinander und mit seitlichem Abstand voneinander so an der Wand befestigt werden, dass sie von einer Seite und parallel zur Wand gesehen deckungsgleich sind (Figur 4).

Der Vorlauf 2 und der Rücklauf 3, die im Ausführungsbeispiel Rohre mit gegenüberliegenden Parallelflächen sind, werden in die offenen Rohrschellen 5, 6 eingelegt und die Rohrschellen 5, 6 werden geschlossen, indem ihre Schellenbügelarme 30 zusammengedrückt werden, so dass die Schließmechanismen 31 in Eingriff kommen. Die Schellenbügelarme 30 werden so fest zusammen gedrückt, dass sie fest am Vorlauf 2 und am Rücklauf 3 anliegen. Die Rasteinrichtungen der Schließmechanismen 31 der Rohrschellen 5, 6 ermöglichen eine Anpassung eines Umfangs der Rohrschellen 5, 6 an einen Durchmesser beziehungsweise Umfang des Vorlaufs 2 und des Rücklaufs 3. Die Rohrschellen 5, 6 lassen sich von Hand ohne Werkzeug um den Vorlauf 2 und den Rücklauf 3 herum schließen.

Ebenfalls zur Anpassung an den Durchmesser des Vorlaufs 2 und des Rücklaufs 3 weisen die Rohrschellen 5, 6, die die Befestigungsbügel 7, 8 bilden, von Innenseiten ihrer Schellenbügelarme 30 nach innen stehende, elastisch verformbare Stege als Anlagen 32 für den Vorlauf 2 und den Rücklauf 3 des Heizkreisverteilers auf.

Durch Verschieben der ersten Rohrschellen 5 lässt sich ein Abstand der ersten Rohrschellen 5 von den zweiten Rohrschellen 6 einstellen, beziehungsweise an einen Abstand des Vorlaufs 2 vom Rücklauf 3 anpassen.

Wie geschrieben sind die ersten und die zweiten Rohrschellen 5, 6 mit Ausnahme ihrer Farben identisch. Die ersten Rohrschellen 5 oder jedenfalls die ersten Rohrschellen 5, die zur Befestigung des Rücklaufs 3 vorgesehen sind, sind im Ausführungsbeispiel blau und die zweiten Rohrschellen 6 oder die zweiten Rohrschellen 6, die zur Befestigung des Vorlaufs 2 vorgesehen sind, sind im Ausführungsbeispiel rot.

Der dritte Befestigungsabschnitt 15 des Grundhalters 4 weist einen größeren Abstand von der Wandbefestigungsebene 17 beziehungsweise von der nicht dargestellten Wand, an der die Grundhalter 4 befestigt sind, auf, als der Schiebeabschnitt 12. Dadurch weisen auch die ersten und die zweiten Rohrschellen 5, 6 und der Vorlauf 2 und der Rücklauf 3 unterschiedliche Abstände von der Wandbefestigungsebene 17 und von der Wand auf. Dadurch lassen sich nicht dargestellte Heizwasserrohre oder allgemein Heizwasserleitungen, die vom Vorlauf 2 zu Heizkreisen oder die von den Heizkreisen zum Rücklauf 3 führen, einfach parallel zu der Wandbefestigungsebene 17 und zur Wand vom Vorlauf 2 über den Rücklauf 3, oder umgekehrt vom Rücklauf 3 über den Vorlauf 2 hinweg führen.

### Bezugszeichenliste

- 1: Wandbefestigungsvorrichtung
- 2: Vorlauf
- 3: Rücklauf
- 4: Grundhalter
- 5: erste Rohrschelle
- 6: zweite Rohrschelle
- 7: erster Befestigungsbügel
- 8: zweiter Befestigungsbügel
- 9: Wandseite
- 10: Wand abgewandte Seite
- 11: erster Befestigungsabschnitt
- 12: Schiebeabschnitt
- 13: zweiter Befestigungsabschnitt
- 14: Kröpfung
- 15: dritter Befestigungsabschnitt
- 16: Befestigungsloch
- 17: Wandbefestigungsebene
- 18: Fußplatte
- 19: Federlasche
- 20: Steg
- 21: Zahn
- 22: Längsschlitz
- 23: Verzahnung
- 24: Feststelleinrichtung
- 25: Halter
- 26: Raste
- 27: Schnappbefestigungseinrichtung
- 28: Schiebeführung
- 29: Langloch
- 30: Schellenbügelarm
- 31: Schließmechanismus
- 32: Anlage
- 33: Bügelanlage

## Patentansprüche

1. Wandbefestigungsvorrichtung für einen Vorlauf (2) und einen Rücklauf (3) eines Heizkreisverteilers, mit einem eine Wandbefestigungsebene (17) aufweisenden Grundhalter (4), der mit der Wandbefestigungsebene (17) an einer Wand anliegend an der Wand befestigbar ist, und mit zwei an dem Grundhalter (4) angeordneten Befestigungsbügeln (7, 8) zur Befestigung des Vorlaufs (2) des Rücklaufs (3) des Heizkreisverteilers an dem Grundhalter (4), wobei der Grundhalter (4) Bügelanlagen (33) für die beiden Befestigungsbügel (7, 8) in unterschiedlichen Abständen von der Wandbefestigungsebene (17) aufweist, **dadurch gekennzeichnet, dass** die Wandbefestigungsvorrichtung (1) eine Schiebeführung (28) für einen der beiden Befestigungsbügel (7) aufweist, die den einen Befestigungsbügel (7) zu einer Anpassung eines Abstands des Vorlaufs (2) vom Rücklauf (3) des Heizkreisverteilers voneinander verschieblich am Grundhalter (4) führt.

2. Wandbefestigungsvorrichtung nach Anspruch 1, **dadurch gekennzeichnet, dass** der Grundhalter (4) streifenförmig, insbesondere ein Blechstreifen ist.

3. Wandbefestigungsvorrichtung nach Anspruch 1 oder 2, **dadurch gekennzeichnet, dass** die Wandbefestigungsvorrichtung (1) zwei Grundhalter (4) mit jeweils zwei Befestigungsbügeln (7, 8) aufweist.

4. Wandbefestigungsvorrichtung nach einem oder mehreren der Ansprüche 1 bis 3, **dadurch gekennzeichnet, dass** die beiden Befestigungsbügel (7, 8) geometrisch gleich sind.

5. Wandbefestigungsvorrichtung nach einem oder mehreren der vorhergehenden Ansprüche, **dadurch gekennzeichnet, dass** die beiden Befestigungsbügel (7, 8) verschiedene Farben aufweisen und dass insbesondere ein zweiter Befestigungsbügel (8) für den Vorlauf (2) rot und ein erster Befestigungsbügel (7) für den Rücklauf (3) blau ist.

6. Wandbefestigungsvorrichtung nach einem oder mehreren der vorhergehenden Ansprüche, **dadurch gekennzeichnet, dass** der Grundhalter (4) im Bereich der Schiebeführung (28) für den ersten der beiden Befestigungsbügel (7) und/oder an einem dritten Befestigungsabschnitt (15), an dem der zweite Befestigungsbügel (8) angeordnet ist, einen Abstand von der Wandbefestigungsebene (17) aufweist.

7. Wandbefestigungsvorrichtung nach einem oder mehreren der vorhergehenden Ansprüche, **dadurch gekennzeichnet, dass** einer der beiden Befestigungsbügel (7, 8) eine Schnappbefestigungseinrichtung (27) zur Befestigung an dem Grundhalter (4) aufweist.

8. Wandbefestigungsvorrichtung nach Anspruch 7, **dadurch gekennzeichnet, dass** die Schnappbefestigungseinrichtung (27) einen federnden Halter (25), der seitlich in Richtung der Wandbefestigungsebene (17) an dem Grundhalter (4) vorbei tritt, mit einer Raste (26), die den Grundhalter (4) auf einer Wandseite (9) hintergreift, aufweist.

9. Wandbefestigungsvorrichtung nach einem oder mehreren der vorhergehenden Ansprüche, **dadurch gekennzeichnet, dass** die Wandbefestigungsvorrichtung (1) eine vorzugsweise werkzeuglos betätigbare Feststelleinrichtung (24) zu einer inbesondere schrittweise unverschieblichen Festlegung des ersten der beiden Befestigungsbügel (7) an dem Grundhalter (4) aufweist.

10. Wandbefestigungsvorrichtung nach Anspruch 9, **dadurch gekennzeichnet, dass** der Grundhalter (4) eine zahnstangenartige Verzahnung (23) als Teil der Feststelleinrichtung (24) aufweist.

11. Wandbefestigungsvorrichtung nach Anspruch 9 oder 10, **dadurch gekennzeichnet, dass** einer der beiden Befestigungsbügel (7, 8) eine Federlasche (19) mit einer Klinke aufweist, die in Eingriff mit dem Grundhalter (4) steht und den Befestigungsbügel (7, 8) unverschieblich an dem Grundhalter (4) festlegt und die durch elastische Verformung der Federlasche (19) außer Eingriff vom Grundhalter (4) gebracht werden kann, so dass der Befestigungsbügel (7, 8) am Grundhalter (4) verschoben werden kann.

12. Wandbefestigungsvorrichtung nach einem oder mehreren der vorhergehenden Ansprüche, **dadurch gekennzeichnet, dass** die Befestigungsbügel (7, 8) einschließlich Schließmechanismen (31) zum Schließen der Befestigungsbügel (7, 8) um den Vorlauf (2) und den Rücklauf (3) und/oder Befestigungseinrichtungen, insbesondere Schnappbefestigungseinrichtungen (27), zur Befestigung der Befestigungsbügel (7, 8) an dem Grundhalter (4) aufweisen, die einstückige Bestandteile der Befestigungsbügel (7, 8) sind.

13. Wandbefestigungsvorrichtung nach einem oder mehreren der vorhergehenden Ansprüche, **dadurch gekennzeichnet, dass** die Befestigungsbügel (7, 8) Schließmechanismen (31) mit Rasteinrichtungen aufweisen, die ein werkzeugloses Schließen der Befestigungsbügel (7, 8) mit vorzugsweise verschiedenen Umfängen ermöglichen.

14. Wandbefestigungsvorrichtung nach einem oder mehreren der vorhergehenden Ansprüche, **dadurch gekennzeichnet, dass** die Befestigungsbügel (7, 8) verformbare, nach innen stehende Anlagen (32) für den Vorlauf (2) oder den Rücklauf (3) des Heizkreisverteilers zu einer Anpassung der Befestigungsbügel (7, 8) an Vorläufe (2) und Rückläufe (3) mit verschiedenen Umfängen aufweisen.
